Europäisches Patentamt

European Patent Office

Office européen des brevets

(19)

(11) Veröffentlichungsnummer: **0 354 307 B1**

(12) # EUROPÄISCHE PATENTSCHRIFT

(45) Veröffentlichungstag der Patentschrift: **02.12.92**

(51) Int. Cl.5: **D21B 1/32**

(21) Anmeldenummer: **89109119.1**

(22) Anmeldetag: **20.05.89**

(54) **Verfahren zur Behandlung der Kurzfaserfraktion nach Abtrennen der Langfaserfraktion aus einem Sekundärfasergemisch, insbesondere zur Herstellung von Faltschachtelkartons.**

(30) Priorität: **12.08.88 DE 3827336**

(43) Veröffentlichungstag der Anmeldung:
**14.02.90 Patentblatt 90/07**

(45) Bekanntmachung des Hinweises auf die
Patenterteilung:
**02.12.92 Patentblatt 92/49**

(84) Benannte Vertragsstaaten:
**AT FR NL**

(56) Entgegenhaltungen:
**DE-A- 1 761 864**
**DE-A- 2 908 660**
**FR-A- 2 494 735**

(73) Patentinhaber: **SULZER-ESCHER WYSS GMBH**
**Escher Wyss-Strasse 25 Postfach 1380**
**W-7980 Ravensburg(DE)**

(72) Erfinder: **Lang, Heinrich**
**Oberer Kirchberg 15**
**W-7981 Fronreute-Fronhofen(DE)**
Erfinder: **Selder, Harald**
**Goethestrasse 16**
**W-7981 Schlier(DE)**

## Beschreibung

Die Erfindung bezieht sich auf ein Verfahren gemäß dem Oberbegriff des Anspruchs 1.

Bei Herstellung von Faltschachtelkartons ist es üblich, zu einem großen Teil Sekundärfasern zu verwenden. Dies sind Fasern, die bei Verarbeitung von Altpapier gewonnen werden. Dieses Fasergemisch aus langen und kurzen Fasern wird mit Hilfe von mit Sieben arbeitenden Fraktioniermaschinen in eine Langfaserfraktion und in eine Kurzfaserfraktion geteilt. Der Langfaserstoff findet in den Decklagen, und der Kurzfaserstoff in den Einlagen des Kartons Verwendung.

Bei der Aufbereitung der Langfaserstoffe für die Decklagen soll eine Erhöhung der Festigkeitseigenschaften vorzugsweise des Elastizitätsmoduls erzielt werden. Deswegen werden die Langfasern in einer Prozeßstufe mit Wärme behandelt und danach oder auch gleichzeitig mechanisch in einem Disperger bearbeitet. Bei diesem mechanischen Dispergierprozeß wird neben der Festigkeitsverbesserung auch erreicht, daß störende Wachsagglomerate dispergiert werden, so daß sie nicht mehr optisch stören. Die verkleinerten Partikel binden sich an die Oberfläche der Langfasern, so daß sie bei der Verarbeitung an dieser festhalten. Damit ist der Langfaserstoff frei von störenden Wachspartikeln.

Bei dem Kurzfaserstoff für die Einlagen geht es bei der Verarbeitung weniger um die Festigkeit als um das spezifische Volumen, das in dem daraus erzeugten Produkt so groß wie möglich sein soll. Dabei versteht man unter dem spezifischen Volumen das auf das Gewicht bezogene Volumen.

Wie gewonnen von der Fraktioniermaschine - hier wird die Fraktioniertechnik in einem Fiberfraktor angewendet - wird diese Kurzfaserfraktion nach einigen Reinigungs- und Eindickungsschritten der Papiermaschine zugeführt. Diese Technik ist nicht befriedigend. Es zeigte sich nämlich, daß in dem Fertigprodukt störende Wachsflecken festzustellen sind, und daß diese Wachsflecken von Wachspartikeln aus dem Altpapier herrühren, die über die Kurzfaserfraktion in das Produkt gelangt sind. Es hat sich auch gezeigt, daß eine Aussortierung dieser störenden Wachspartikel mit Siebsortierern nicht möglich ist.

Ein durch die DE-A-2908660 beschriebenes Verfahren sieht die Fraktionierung der Fasersuspension in einer Sortiereinrichtung vor, wobei die Kurzfaserfraktion anschließend flotiert oder gewaschen werden soll.

Um andererseits solche störenden Stoffe zu dispergieren statt sie zu entfernen, kann man bekanntlich, wie etwa in der DE-A -1761864 gezeigt, eine Heiß-Knet-Vorrichtung, den sogenannten Einwellenzerfaserer, verwenden. Dieses Verfahren arbeitet sowohl mit Hitze als auch mit der Erzeugung und Einwirkung hoher mechanischer Scherkräfte auf das Sekundärfasergemisch.

Eine Heißdispergierung, wie diese bei der Langfaserfraktion angewendet wird, erscheint hier nicht zweckmäßig, da sie energetisch und maschinell sehr aufwendig ist, außerdem widerspricht sie dem Zwecke der Behandlung, da dabei das gewünschte möglichst große Volumen des Kurzfaserstoffes verloren ginge.

Es ist Aufgabe der Erfindung, ein Verfahren zur Behandlung der Kurzfaserfraktion zu finden, bei dem in dem Kurzfaserstoff die störenden Wachspartikel eliminiert, d.h. unschädlich gemacht werden. Das Verfahren soll außerdem ein möglichst großes spezifisches Volumen in dem aus dem Kurzfaserstoff gebildeten Produkt erreichbar machen. Es soll ein größerer Energieaufwand vermieden werden.

Diese Aufgabe ist erfindungsmäßig dadurch gelöst, daß die in einem Fraktionator gewonnene Kurzfaserfraktion in einem Verfahrensschritt einer Heißbehandlung über eine definierte Verweilzeit und bei einer Temperatur zwischen 80°C und 130°C unterzogen wird und ohne jegliche, die Fasern durch mechanische Mittel verändernde Nachbehandlung einer Maschinenbütte zugeführt wird.

Es zeigt sich, daß durch diese reine Heißbehandlung ohne mechanische Bearbeitung des Faserstoffes die störenden Wachspartikel weitestgehend eliminiert werden. Gleichzeitig wird durch diesen Vorgang das erreichbare spezifische Volumen des so behandelten Kurzfaserstoffes sogar erheblich gesteigert. Das Wachspartikelspektrum ist in der Kurzfaserfraktion nach der Fraktionierstufe so klein, daß sogar eine vollständige Wachsdispergierung durch die Heißbehandlung möglich ist. In dem Fertigprodukt sind keine Wachsflecken sichtbar. Die Heißbehandlung kann je nach Anforderungen sowohl im Atmosphärenbereich, als auch im Druckbereich erfolgen.

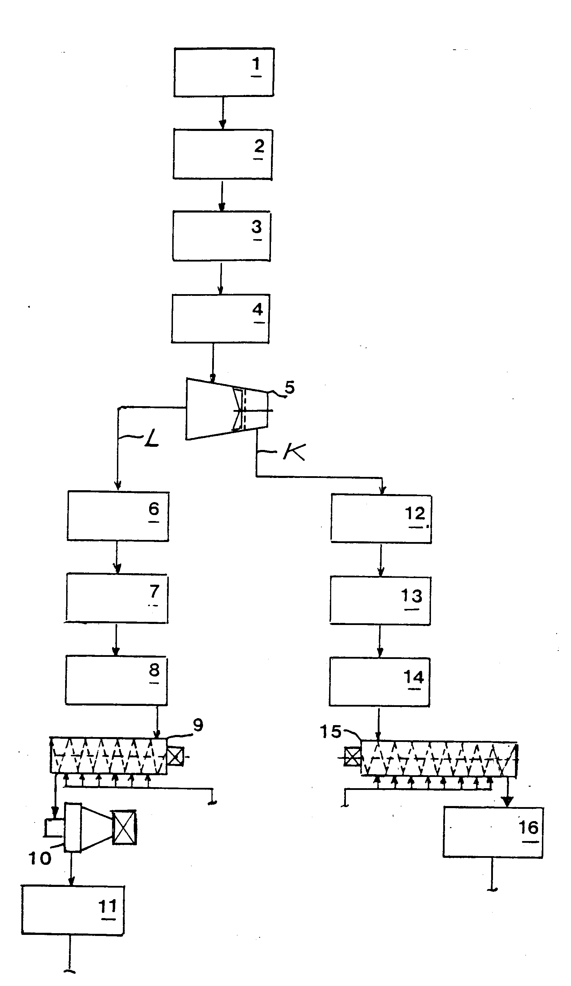

Im weiteren wird der Erfindungsgegenstand näher beschrieben und erklärt. Es wird anhand eines Blockschaltbilds in der Zeichnung ein Beispiel des erfindungsgemäßen Verfahrens beschrieben.

Das Altpapiermaterial wird in einem Stoffauflöser 1 aufgelöst. Aus einer Ableerbütte 2 wird der Stoff an einem Dickstoffreiniger 3 von Schwerteilen befreit und an einem, z.B. Fiberizer 4, grob sortiert, d.h. von größeren Schmutzpartikeln befreit. An einem Fiberfraktor 5 wird das Sekundärfasergemisch in die Langfaserfraktion L und in die Kurzfaserfraktion K aufgeteilt. Die Langfaserfraktion L wird einer Feinsortierung 6, einer Reinigung 7 und einer Eindickung 8 unterzogen, bevor die Heißdispergierung vorgenommen wird, die aus einem Heißbehandlungsschritt 9 und einem mechanischen Behandlungsschritt an einem Disperger 10 besteht. Dieser Langfaserstoff mit den mechanisch verfestigten Langfasern wird dann einer Bütte 11 zugeführt.

Die Kurzfaserfraktion K nach dem Fiberfraktor 5 wird einer Feinsortierung 12, etwa einem Dünnstoffsortierer, zur Beseitigung eines restlichen gröberen Schmutzes, anschließend einer Reinigung 13 durch einen Dünnstoffreiniger, einen Hydrozyklon, unterzogen und beim Schritt 14 eingedickt. So behandelter Kurzfaserstoff kommt zu der Heißbehandlung 15 in eine mit Einblasung von Wasserdampf beheizte Heizschnecke Es ist aber auch eine andere Reihenfolge denkbar: Dünnstoffreiniger, Dünnstoffsortierer, Schnecken-Eindicker, Heizschnecke. In der Heizschnecke wird der Kurzfaserstoff über eine definierte Verweilzeit bei einer Temperatur zwischen 80°C und 130°C heißbehandelt, wobei er an spezifischem Volumen gewinnt und von störenden Wachspartikeln befreit wird. Die stark zerkleinerten Wachspartikel sind optisch mit dem bloßen Auge nicht mehr feststellbar.

Die Kurzfaserfraktion kann z.B. in einem Schneckenerhitzer über eine Verweilzeit von 15 bis 20 min. bei einer Temperatur im Bereich von 80° bis 100° Celsius heißbehandelt werden. Die Heißbehandlung kann alternativ in einem Stapelturm mit direkter Wasserdampfeinblasung bei einer Dampftemperatur zwischen 100° und 130° und mit einer Verweilzeit von etwa 10 min erfolgen. Eine weitere Möglichkeit ist die Heißbehandlung des Kurzfaserstoffes in einem Behälter mit direkter Dampfeinblasung, welche den Behälterinhalt fluidisiert.

Nach dieser Heißbehandlung 15 kommt der Kurzfaserstoff ohne eine die Faser verändernde, mechanische Nachbehandlung in eine Maschinenbütte 16 der Papiermaschine. Er kann beispielsweise vor oder in der Maschinenbütte 16 durch Rühren weiter aufgelockert werden, ohne daß dadurch die Fasern mechanisch verändert werden.

## Patentansprüche

1. Verfahren zur Behandlung der Kurzfaserfraktion (K) nach Abtrennen der Langfaserfraktion in einem Fraktionator (5) aus einem Sekundärfasergemisch, insbesondere zur Herstellung von Faltschachtelkartons, dadurch gekennzeichnet, daß die gewonnene Kurzfaserfraktion (K) in einem Verfahrensschritt einer Heißbehandlung über eine definierte Verweilzeit und bei einer Temperatur zwischen 80°C und 130°C unterzogen wird und ohne jegliche, die Fasern durch mechanische Mittel verändernde Nachbehandlung einer Maschinenbütte (16) zugeführt wird.

2. Verfahren nach Anspruch 1, dadurch gekennzeichnet, daß die Heißbehandlung in einem Schneckenerhitzer (15) erfolgt.

3. Verfahren nach Anspruch 1, dadurch gekennzeichnet, daß die Kurzfaserfraktion (K) aus einem Sekundärfasergemisch stammt, das nach der Auflösung (1) eines Altpapiermaterials und der Reinigung in einem Dickstoffreiniger (3) mit Hydrozyklontechnik und vor der Fraktionierung am Fraktionator (5) noch mittels eines Siebsortierers (4) von größeren Schmutzpartikeln gereinigt wurde, und daß die Kurzfaserfraktion (K) nach der Fraktionierung (5) einer Feinsortierung an einem Siebsortierer (12) zur Entfernung kleiner Schmutzpartikel, einer Dünnstoffreinigung (13) mit Hydrozyklontechnik, einem Wasch-und/oder Eindickprozeß (14) unterzogen wird, bevor sie der Heißbehandlung zugeführt wird.

4. Verfahren nach Anspruch 1, dadurch gekennzeichnet, daß das Kurzfasermaterial (K) nach der Heißbehandlung vor der Maschinenbütte (16) oder in dieser durch Rühren weiter aufgelockert wird, ohne jedoch die Fasern mechanisch zu verändern.

5. Verfahren nach Anspruch 1, dadurch gekennzeichnet, daß die Kurzfaserfraktion nach vorhergehenden Sortierungs- und Reinigungsschritten in einem Schneckenerhitzer (15) über eine Verweilzeit von 15 bis 20 min. bei einer Temperatur im Bereich von 80 bis 100° Celsius heißbehandelt wird.

6. Verfahren nach Anspruch 1, dadurch gekennzeichnet, daß die Heißbehandlung in einem Stapelturm mit direkter Wasserdampfeinblasung bei einer Dampftemperatur zwischen 100 und 130° erfolgt und daß die Verweilzeit etwa 10 min. beträgt.

7. Verfahren nach Anspruch 1, dadurch gekennzeichnet, daß die Heißbehandlung in einem Behälter mit direkter Dampfeinblasung erfolgt, welche den Behälterinhalt fluidisiert.

8. Anlage zur Ausführung des Verfahrens nach Anspruch 1, dadurch gekennzeichnet, daß die Kurzfaserfraktion (K), nachdem sie in einem Fiberfraktor gewonnen wurde, einem Dünnstoffsortierer, einem Dünnstoffreiniger, einem Schnecken-Eindicker sowie einer Heizschnecke mit direkter Dampfeinblasung zugeführt wird, wobei diese Apparate nacheinander in der Reihenfolge dieser obigen Aufzählung die Kurzfaserfraktion behandeln oder in der Reihenfolge Dünnstoffreiniger, Dünnstoffsortierer, Schnecken-Eindicker, Heizschnecke.

## Claims

1. A process for treating the short fibre fraction (K) after separating off the long fibre fraction in a fractionator (5) from a reclaimed fibre mixture, in particular for producing folded box boards, characterised in that the short fibre fraction (K) obtained is subjected in one process step to heat treatment for a defined dwell time and at a temperature of between 80°C and 130°C and is fed to a machine chest (16) without any subsequent treatment which would modify the fibres by mechanical means.

2. A process according to Claim 1, characterised in that the heat treatment takes place in a screw-type heater (15).

3. A process according to Claim 1, characterised in that the short fibre fraction (K) comes from a reclaimed fibre mixture which, after the disintegration (1) of a waste paper material and cleaning in a high-consistency vortex cleaner (3) with hydrocyclone technology and before fractionation on the fractionator (5), has been cleaned of larger particles of dirt by means of a wire mesh screen (4), and that the short fibre fraction (K) after fractionation (5) is subjected to fine sorting on a wire mesh screen (12) in order to remove smaller particles of dirt, low consistency cleaning (13) with hydrocyclone technology, a washing and/or thickening process (14), before being sent for the heat treatment.

4. A process according to Claim 1, characterised in that the short fibre material (K) after the heat treatment is further disintegrated before the machine chest (16) or in the latter by stirring, but without mechanically modifying the fibres.

5. A process according to Claim 1, characterised in that the short fibre fraction after the preceding sorting and cleaning steps is heat-treated in a screw-type heater (15) for a dwell time of 15 to 20 min. at a temperature in the range of 80 to 100° celsius.

6. A process according to Claim 1, characterised in that the heat treatment takes place in a stacking tower with the direct injection of steam at a steam temperature of between 100 and 130°, and that the dwell time is about 10 min.

7. A process according to Claim 1, characterised in that the heat treatment takes place in a vessel with direct injection of steam which fluidises the contents of the vessel.

8. An installation for performing the process according to Claim 1, characterised in that the short fibre fraction (K), once it has been obtained in a fibre fractor, is sent to a low consistency sorter, a low consistency cleaner, a screw-type thickener and also a heating screw with direct injection of steam, these items of apparatus treating the short fibre fraction successively in the sequence listed above or in the sequence low consistency cleaner, low consistency sorter, screw-type thickener, heating screw.

**Revendications**

1. Procédé de traitement de la fraction des fibres courtes (K) après séparation de la fraction des fibres longues dans un séparateur de fractions (5), à partir d'un mélange de fibres secondaires, en particulier pour la fabrication de carton pour boîtes pliantes,
**caractérisé** en ce que la fraction des fibres courtes (K) obtenue est soumise dans une étape du procédé à un traitement à chaud pendant un temps de séjour défini et à une température entre 80°C et 130°C et est amenée, sans aucun traitement ultérieur modifiant les fibres par des moyens mécaniques, à une caisse de tête (16) d'une machine à papier.

2. Procédé selon la revendication 1, caractérisé en ce que le traitement à chaud a lieu dans un réchauffeur à vis sans fin (15).

3. Procédé selon la revendication 1, caractérisé en ce que la fraction des fibres courtes (K) provient d'un mélange de fibres secondaires ayant été, après la désagrégation (1) d'une matière de vieux papiers et après l'épuration dans un épurateur (3) de matière épaisse avec la technique hydrocyclone et avant la séparation en fractions dans le séparateur de fractions (5), encore épurée par élimination des particules d'impuretés relativement grosses au moyen d'un classificateur à tamis (4), et en ce que la fraction des fibres courtes (K) est soumise après le fractionnement (5) à un classement fin sur un classificateur à tamis (12) pour l'élimination des petites particules d'impuretés, à une épuration de la matière diluée (13) avec la technique hydrocyclone, à un processus de lavage et/ou d'épaississement (14), avant d'être amenée au traitement à chaud.

4. Procédé selon la revendication 1, caractérisé en ce que la matière à fibres courtes (K) est soumise, après le traitement à chaud, en amont de la caisse de tête (16) de la machine ou dans celle-ci, par agitation, à un allégement supplémentaire, mais sans modifier les fibres mécaniquement.

5. Procédé selon la revendication 1, caractérisé en ce que la fraction des fibres courtes est soumise, après les opérations préalables de classement et d'épuration, à un traitement à chaud dans un réchauffeur à vis sans fin (15) pendant un temps de séjour de 15 à 20 minutes, à une température dans la zone de 80 à 100° Celsius.

6. Procédé selon la revendication 1, caractérisé en ce que le traitement à chaud a lieu dans une tour de stockage avec injection directe de vapeur d'eau, à une température de vapeur entre 100 et 130°, et en ce que le temps de séjour est d'environ 10 minutes.

7. Procédé selon la revendication 1, caractérisé en ce que le traitement à chaud a lieu dans un récipient avec injection directe de vapeur qui fluidifie le contenu du récipient.

8. Installation pour la mise en oeuvre du procédé selon la revendication 1, caractérisée en ce que la fraction des fibres courtes (K), après avoir été obtenue dans un séparateur de fibres, est amenée à un classificateur de matière diluée, à un épurateur de matière diluée, à un épaississeur à vis sans fin ainsi qu'à une vis sans fin chauffante à injection directe de vapeur, tandis que ces appareils traitent, l'un après l'autre dans l'ordre de cette énumération ci-dessus, la fraction des fibres courtes, ou bien dans la succession : épurateur de matière diluée, classificateur de matière diluée, épaississeur à vis sans fin, vis sans fin chauffante.